# EUROPÄISCHE PATENTSCHRIFT

(11) **EP 0 306 444 B1**
(45) Veröffentlichungstag und Bekanntmachung des Hinweises auf die Patenterteilung: **31.08.1994**
(21) Anmeldenummer: 88810275.3
(22) Anmeldetag: 28.04.1988
(51) Int. Cl.: C08L 67/06, C08K 5/46, C08K 5/17, F16B 13/00, C09K 3/10, C08K 5/47

(54) **Verwendung von stabilisierten, ungesättigte Polyesterharze enthaltenden Massen als Klebe-, Dübel- oder Spachtelmasse**
Use of compounds containing stabilized, unsaturated polyester resins as adhesive or filler mass
Utilisation des composés contenant des résines polyesters insaturées stabilisées comme adhésif, masse pour fixer des chevilles ou mastic à spatuler

(30) Priorität: 31.08.1987 DE 3729054
(43) Veröffentlichungstag der Anmeldung: 08.03.1989
(73) Patentinhaber: HILTI Aktiengesellschaft, 9494 Schaan (LI)
(72) Erfinder: Schmidt, Arno P.O., Dr., D-7101 Abstatt (DE)
(74) Vertreter: Wildi, Roland

(56) Entgegenhaltungen:
- EP-A- 0 043 484
- FR-A- 2 213 955
- GB-A- 2 063 888
- US-A- 3 683 045

## Beschreibung

Ungesättigte Polyester enthaltende Massen, die verstärkt oder unverstärkt vernetzbar sind, haben eine ausserordentliche Bedeutung erlangt. Derartige Massen können in Gies-, Tränk-, Spachtel- und Spritzverfahren in der Elektroindustrie, im Behälterbau, im Baubereich, im Schiffsbau, in der Kraftfahrzeugindustrie usw, für Beschichtungen und Verbindungen verwendet werden. Im Handauflege-, Press-, Faserspritzverfahren und dergleichen können Formteile unterschiedlichster Art und für unterschiedlichste Zwecke aus verstärkten Massen hergestellt werden.

Zur Verarbeitung werden hierbei die ungesättigte Polyester enthaltenden Massen, gemischt mit dem Vernetzungsmittel, vorzugsweise Monovinylverbindungen oder polyfunktionelle, polymerisierbare Verbindungen, mit Katalysatoren und Beschleunigern versehen und dann bei Raumtemperatur oder erhöhter Temperatur gehärtet. Die Lagerfähigkeit der ungesättigte Polyester und gegebenenfalls Vernetzungsmittel enthaltenden Massen ist jedoch beschränkt und temperatur- und zeitabhängig. Es tritt nach einiger Zeit Gelierung ein nach entsprechender, die Verarbeitung störender Zunahme der Viskosität. Zur Vermeidung der in Abwesenheit von Katalysatoren eintretenden frühzeitigen Härtung ist es bekannt, Inhibitoren wie Phenolderivate, wie tert. Butylbrenzkatechin, Chinone, Hydrochinone, Phosphitester, Ammoniumsalze, Schwefel, Iod, siliziumorganische Verbindungen usw. zuzusetzen. Dennoch gewährleisten die Hersteller regelmässig einwandfreie Qualität nur für einen Zeitraum von sechs Monaten, wobei andererseits von den Herstellern der Halbfertigerzeugnisse Gewährleistungszeiten von sechs bis zwölf Monaten verlangt werden. In Anbetracht der nur schwer erfassbaren Transport- und Lagerbedingungen sind derartige Gewährleistungsfristen ausserordentlich problematisch. Zwar kann man davon ausgehen, dass durch erhöhte Inhibitormengen auch die Stabilität bzw. Lagerfähigkeit entsprechend erhöht wird. In aller Regel wird jedoch durch die Zugabe von Inhibitoren auch die Polymerisations- bzw Vernetzungsfähigkeit und die Polymerisations- bzw Vernetzungsgeschwindigkeit nach Zugabe von Katalysatoren erheblich beeinflusst. Dieser nachteilige Einfluss der Inhibitoren auf die Härtungseigenschaften der Massen nach Zugabe des Katalysators ist eine besonders nachteilige Erscheinung.

Der Erfindung liegt nun die Aufgabe zugrunde, eine vernetzbare, ungesättigte Polyester enthaltende Masse zur Verfügung zu stellen, die in ihrer Lagerfähigkeit den bekannten Massen überlegen ist. Diese überlegene Lagerfähigkeit sollte möglichst nicht mit deutlich verschlechterten Härtungseigenschaften der Massen nach Zugabe der Katalysatoren erkauft werden müssen.

Gegenstand der Erfindung ist danach die Verwendung von vernetzbaren ungesättigten Polyestern mit Phenothiazin als alleinigen Inhibitor und zusätzlichem aliphatischem und/oder heterocyclischem Amin als Dübel-, Klebe- oder Spachtelmasse, insbesondere die Verwendung solcher jedoch Vernetzungsmittel-haltiger Polyestermassen für die angegebenen Verwendungszwecke.

Als Polyester sind die Veresterungsprodukte von ungesättigten und gesättigten Polycarbonsäuren und Polyalkoholen enthalten. Als ungesättigte Polycarbonsäuren werden hierfür meist Maleinsäure bzw. Maleinsäureanhydrid und Fumarsäure und als gesättigte Polycarbonsäuren meist o-Phthalsäure, iso-Phthalsäure, Tetrahydrophthalsäure, HET-Säure, Adipinsäure und dergleichen verwendet. Beispiele für Polyalkohole sind Ethylenglykol, 1,3-Propylenglykol, Neopentylglykol, 1,3-Butylenglykol, Glycerin.

Die ungesättigten Polyester-Harze sind meist in Lösungen in reaktionsfähigen (copolymerisierbaren) Lösungsmitteln enthalten. Als wichtigstes reaktionsfähiges Monomeres wird Styrol verwendet. Beispiele anderer Monomere sind Acrylsäuretert.-Butylester, Diallylphthalat und Triallylcyanurat (HOUWINK - STAVERMANN: Chem. und physik. Grundlagen der Kunststoffe, Akad. Verlagsgesellschaft Leipzig 1962).

Als besonders geeignet haben sich Lösungen von insbesondere aminovorbeschleunigten Glykol-Fumarat-Phthalat-Harzen, zB folgender Merkmale erwiesen.

| | |
|---|---|
| Styrolgehalt | 35% |
| Säurezahl | 30 mg KOH/g |
| Viskosität | 1100cP |
| Dichte | 1,12g/ml |
| Brechungsindex bei 20°C | 1,53 |
| Flammpunkt | 34°C |

Die Massen können unverstärkt oder verstärkt sein, wobei als Verstärkungsmittel die üblichen Zusätze, namentlich auf mineralischer Basis, einschliesslich Fasern, wie Glasfasern enthalten sein können. Die Massen können auch das Vernetzungsmittel bereits enthalten, wobei die Vernetzungsmittel vorzugsweise copolymerisierbare Verbindungen sind. Hierbei kann es sich sowohl um Monovinylverbindungen als auch um polyfunktionelle, polymerisierbare Verbindungen handeln. Die bekannteste, zur Vernetzung brauchbare Monovinylverbindung ist Styrol. Daneben oder anstelle dieses Reaktivverdünners können auch Vernetzungsmittel wie Acrylsäure, Acrylsäurederivate, insbesondere Acrylsäureester wie zB Isobutylmethacrylat und dergleichen Monovinylverbindungen enthalten sein. Als polyfunktionelle, polymerisierbare Verbindungen können Divinylbenzol, N.N-Divinyl-Harnstoff, N.N-Divinylcyanamid, Allylverbindungen, insbesondere Allylester von Carbonsäuren, wie Diallylphthalat, Diallylmaleinat, Diallylfumarat, und stark vernetzende Mittel wie Triallylcyanurat enthalten sein.

Die Verwendung von Vernetzungsmitteln auch anderen Typs, wie beispielsweise von Isocyanaten ist jedoch keineswegs ausgeschlossen.

Als Stabilisator hat sich Phenathiazin selbst in besonderem Umfang bewährt. Es können indessen jedoch auch Phenothiazine verwendet werden, die ein oder mehrfach mit C₁-C₆-Alkylamino- oder die-C₁-Alkylgruppen, C₁-Alkylamino-Gruppen, mit Nitrogruppen und/ oder mit Halogen, insbesondere Chlor, Brom oder Jod substituiert sind. Die Phenothiazine werden im allgemeinen in Mengen von 0,0015 bis 0,1 Gew.-% insbesondere 0,01 bis 0,075 Gew.-%, bezogen auf den ungesättigten Polyester verwendet. Die Verwendung geringer oder auch höherer Mengen zB 0,5 oder bis 1,5 Gew-% ist nicht ausgeschlossen.

In Stabilitätstests haben sich die erfindungsgemäßverwendeten Massen voll bewährt. Dabei erfolgte die Prüfung der Stabilität der erfindungsgemässen, Inhibitor enthaltenden Massen in üblicher Weise durch Temperversuche. Die Temperung der jeweiligen Proben erfolgte bei 85°. auch nach mehrtägiger Temperung zeigten die erfindungsgemäßverwendeten Massen keinen merklichen Anstieg der Viskosität und keine Aenderung im Gelierverhalten. Bei den Gelierzeiten war sogar ein leichter Anstieg zu beobachten. Diese Ergebnisse wurden durch die Praxis voll bestätigt.

Die erfindungsgemäßverwendeten Massen können mit ihren Vernetzungsmitteln durch Zugabe der üblichen, namentlich radikalischen Katalysatoren gehärtet werden. Als radikalische Polymerisationskatalysatoren eignen sich insbesondere Peroxide und Hydroperoxide , vorzugsweise Benzoylperoxid, Cumolhydroperoxid, tert-Butylhydroperoxid, Lauroyl-Methyläthylketon- und/oder Cyclohexanonperoxid. Die Peroxide können pulver- oder pastenförmig, den in üblicher Menge, zB im Bereich von 0,5 bis 4 Gew.-% bezogen auf den ungesättigten Polyester, eingesetzt. Zusätzlich können die üblichen Beschleuniger eingesetzt werden wie Schwermetallsalze, zB Kobaltsalze oder Mercaptane.

Es sind in den erfindungsgemäßverwendeten ungesättigte Polyester enthaltenden, vernetzungsmittelhaltigen oder vernetzungsmittelfreien Massen zusätzlich Amine enthalten. Hierbei haben sich aliphatische Amine, sowohl primäre, besser aber sekundäre und insbesondere tertiäre Amine besonders bewährt. Die aliphatischen Amine können linear, cyclisch und/oder polycyclisch sein. Wobei besonders tertiäre, polycyclische Amine, wie Triäthylendiamin geeignet sind. Sinngemäss das Gleiche gilt auch für heterocyclische Amine oder Gemische solcher heterocyclischen Amine mit aliphatischen, insbesondere aliphatischen, tertiären Aminen. . Die Amine werden im allgemeinen in Mengen von 0,5 bis 3 Gew.-% bezogen auf den ungesättigten Polyester eingesetzt. Besonders geeignet sind solche erfindungsgemässen Massen, die, neben dem Amin, das Phenothiazin in Mengen von mehr als 0,025 Gew.-%, bis beispielsweise 0,5 Gew.-%, bezogen auf den ungesättigten Polyester, enthalten.

Die erfindungsgemäßverwendeten zur Stabilisierung des ungesättigten Polyesters Phenothiazin und Amin enthaltenden Massen weisen den besonderen Vorteil auf, dass sie durch das Zusammenwirken der Phenothiazinverbindung und des Amins eine hervorragende Lagerbeständigkeit besitzen, andererseits nach Zugabe des Katalysators und gegebenenfalls des Vernetzungsmittels, soweit dies noch nicht oder nicht in ausreichender Menge enthalten ist, in kürzester Zeit polymerisieren bzw vernetzen. Tatsächlich besitzen die erfindungsgemäßverwendeten Massen eine Härtungscharakteristik, die der einer inhibitorfreien Masse entspricht. Die Massen können aufgrund ihrer ausgezeichneten Stabilität bei höheren Betriebstemperaturen verarbeitet werden. Anstelle der bisher üblichen 35°C als obere Toleranzgrenze der Verarbeitungstemperatur ist danach auch ein effizienteres Produktionsverfahren zB nach dem Dissolver-Verfahren möglich. Die niedrigere Viskosität der Massen bei höheren Temperaturen erleichtert die Abfüllung. Für die Lagerung und den Transport stehen wesentlich grössere Zeit- und Temperatur-Toleranzen zur Verfügung. Vergleichbare günstige Ergebnisse wurden neben Acrylatharzen auch mit anderen Duroplasten erzielt, wie mit vernetzbaren Aminoplasten.

Die erfindungsgemäßverwendeten, aufgrund ihrer geringen Gelierneigung niedrig viskosen, stabilisierten Massen sind bestimmt zur Verwendung für Dübel-, Haft- und Spachtelzwecke, insbesondere zur Verwendung in Auspressgeräten, in welchen der hinderliche Viskositätsanstieg verhindert wird. Die trotz der hohen Stabilität nach Zusatz des Katalysators erzielbare, schnelle Härtung machen die Massen für diese Verwendungszwecke in besonderem Masse geeignet. Hinzu kommen auch die günstigen Benetzungseigenschaften, namentlich dann, wenn als Ver- und Benetzungsmittel Stoffe wie Styrol, Acrylsäure, Methacrylsäure, Isobutylmethacrylat, n-Butylmethacylat, Vinylimidazol und/oder Perallyläther enthalten sind. Als weitere gute Benetzungsmittel haben sich Furfurol, Tetrahydrofurfurol und Diacetonalkohol erwiesen. Auch hier haben sich, ebenso wie in den zuvor geschriebenen Massen, zusätzlich zu den Gehalten an Phenothiazinverbindungen die Gehalte an Amin, zunehmend von Aetyhlamin über Diäthylamin zu als tertiäre Amine wie Triäthylamin bewährt. Auch heterocyclische Amine wie beispielsweise das sekundäre Morpholin sind brauchbar und in ihrer Wirkung etwa vergleichbar mit anderen sekundären Aminen, wie Diäthylamin. Auch hier wurden mit Triäthylendiamin besonders gute Ergebnisse erzielt.

Die in den erfindungsgemäßverwendeten Massen enthaltende synergistische Kombination von Phenothiazin-Verbindung und Amin zeichnet sich noch durch ein anderes Merkmal aus. Vernetzbare Massen mit einem Gehalt an ungesättigten Polyestern, an Phenothiazin und Amin sind regelmässig nahezu farblos bis gelblich. Setzt man einen Peroxid- oder Hydroperoxid-Katalysator zu, so verfärbt sich die Masse unverzüglich nach tiefdunkelblau. Nach Eintritt der Polymerisation, dh nach Beginn der Gelierung verschwindet die Farbe. Das ausgehärtete Produkt weist wieder die gleiche Farbe wie die Ausgangsmasse auf. Die Kombination von Phenothiazin-Verbindung und Amin in ungesättigten Polyester- Massen erweist sich als Indikator für den Zustand der Mischung. Es lässt sich daraus entnehmen, wann die Polymerisation begonnen hat, wann die Polymerisation anfängt zur Gelbbildung zu führen, ob genügend Härter vorhanden oder noch zugegeben werden muss und schliesslich der Zeitpunkt, an dem die Masse erfahrungsgemäss noch eine solche Viskosität hat, dass sie zur Verarbeitung beispielsweise aus Kartuschen noch ausgedrückt werden kann.

Die nachfolgenden Beispiele dienen der Erläuterung der Erfindung:

### Beispiel

100 Gew.-Teile einer Lösung eines, als ungesättigten Säureanteil Fumarsäure enthaltenden Polyesterharzes mit 40 Gew.-% Styrol nacheinander versetzt mit
4,89 Teilen 1%-iger Lösung von Phenothiazin in Styrol
1,08 Teilen eines Gemisches von Triäthylendiamin mit Morpholin (4:1)
Nach jeder Teilzugabe wurde gerührt. Die unkatalysierte Masse weist ein potlife von 296 h bei 85°C und nach Zugabe von 1,5 Gew.-% Benzoylperoxid, eine Gelierzeit von 384 sec auf.

| Vergleichsbeispiele: | | | | |
|---|---|---|---|---|
| | | nach Härterzugabe Beginn der Gelierung [sec] | Zeit bis zum HärtungsTemp.-Max. [sec] | Katalysator frei potlife/85°X [h] |
| 1. | ungesättigter Polyester, Styrolverdünnt; 1) inhibitorfrei | 363 - 432 | 480 - 550 | 23 |
| 2. | wie Beispiel 1, jedoch zusätz. 0,01 Gew.-% Phenothiazin | 355 | 478 | 82 |
| 3. | wie Beispiel 1, jedoch zusätz. 0,022 Gew.-% Phenothiazin | 450 | 590 | 175 |
| 4. | wie Beispiel 1, jedoch zusätz. 0,05 Gew.-% Pheno-thiazin und 1,00 Gew.-% Triäthylendiamin | 378 - 388 | 482 - 548 | 290 |

| | | | | |
|---|---|---|---|---|
| 1) Glykol-Fumarat-Phthalat-Polyester mit 38 Gew.-% Styrol Säurezahl 32 mg KOH/g Viskosität 1150 cP Flammpunkt 36°C | | | | |

## Patentansprüche

1. Verwendung von vernetzbaren ungesättigten Polyestern mit Phenothiazin als alleinigen Inhibitor und zusätzlichem aliphatischem und/oder heterocyclischem Amin als Dübel-, Klebe- oder Spachtelmasse.

## Claims

1. Use of interlacing unsaturated polyesters with phenothiazine as sole inhibitor and additional aliphatic and/or heterocyclic amine as a dowelling, gluing or filler substance

## Revendications

1. Utilisation de polyesters insaturés réticulés, avec de la phénothiazine comme inhibiteur unique, et avec une amine aliphatique et/ou hétérocyclique en tant qu'additif, comme composition pour l'ancrage des chevilles, composition adhésive ou pâte à reboucher .
